# EUROPEAN PATENT APPLICATION

(11) **EP 4 697 857 A1**
(43) Date of publication of application: **18.02.2026**
(21) Application number: 25192923.8
(22) Date of filing: 30.07.2025
(51) Int. Cl.: H04W 84/12, H04W 56/00

(54) **WIRELESS OUTSTATION CONFIGURED TO TRIGGER TRANSMISSION OF AN UPLINK MESSAGE AND METHOD OF OPERATION OF THE WIRELESS OUTSTATION**

(30) Priority: 13.08.2024 GB 202411919
(71) Applicant: Cambium Networks Ltd, Ashburton, Devon TQ13 7UP (GB)
(72) Inventor: STRONG, Peter, Ashburton, TQ13 7UP (GB); JAMIN, Antony, Ashburton, TQ13 7UP (GB)
(74) Representative: EIP

(57) **Abstract**

A wireless outstation is operated in a fixed wireless access network comprising an access point and a plurality of wireless outstations, the wireless outstation comprising a receiver circuit (11) configured to receive a message (2) from the access point comprising a trigger frame to trigger transmission of an uplink message (5) from the wireless outstation. The trigger frame (4) is generated at the wireless outstation based on a predetermined time division duplex schedule and the generated trigger frame (4) is provided as an input to the receiver circuit (11).

## Description

### Technical Field

The present invention relates generally to a wireless outstation configured to trigger transmission of an uplink message and a method of operation of the wireless outstation, and more specifically, but not exclusively, to a method of operation of a wireless outstation and a wireless outstation configured to use message formats according to an IEEE 802.11 Wi-Fi standard providing Triggered Uplink Access TUA in a fixed wireless access network.

### Background

A fixed wireless access network comprises an access point, typically mounted on an antenna tower, in communication with a number of wireless clients, which may be referred to as outstations, at fixed locations within an area of coverage of the access point, typically mounted on buildings or rooftops. Typically, propagation distances between the access point and the outstations may cover a range from tens of metres to several kilometres or more. It would be convenient to operate the fixed wireless network using message formats according to existing Wi-Fi standards, so that commercially available chipsets can be used to implement wireless transceivers in the system. However, a fixed wireless access system may operate according to a pre-determined time division duplex schedule, which may not be accommodated in a Wi-Fi standard. A fixed time division duplex schedule may provide efficient operation in a fixed wireless access system. It would be beneficial to be able to use chipsets configured to operate according to a Wi-Fi standard in a fixed wireless access network operating according to a pre-determined time division duplex schedule.

### Summary

In accordance with a first aspect of the present invention, there is provided a method of operating a wireless outstation in a fixed wireless access network comprising an access point and a plurality of wireless outstations, the wireless outstation comprising a receiver circuit configured to receive a message from the access point comprising a trigger frame to trigger transmission of an uplink message from the wireless outstation, the method comprising: generating the trigger frame at the wireless outstation based on a predetermined time division duplex schedule; and providing the generated trigger frame as an input to the receiver circuit.

Generating the trigger frame at the wireless outstation and providing the generated trigger frame to the receiver of the outstation allows the timing of the uplink message to be determined locally at the outstation according to the pre-determined schedule instead of determining the timing of the uplink message by receiving a trigger frame from the access point. This allows a group of outstations to transmit uplink messages timed to arrive at the access point simultaneously, where the propagation times between the access point and the outstations cover a wide range. If the transmissions of the uplink messages were triggered by receipt of a trigger frame transmitted from the access point, only a limited range of propagation times could be tolerated if the uplink message is required to be received at the access point within a predetermined time window. Simultaneous reception at the access point may be enabled by use of MU-MIMO (Multi-User Multiple Input Multiple Output) spatial streams allocated to respective outstation of a group, and/or by OFDMA (Orthogonal Frequency Division Multiple Access) for example. The trigger frame is a message transmitted from an access point that causes transmission of an uplink message from an outstation in response to receipt of the message, after a pre-determined period of time. Various formats of trigger frame are possible, and the trigger frame may contain resource allocation information. A trigger frame may also be referred to as a trigger message or simply as a trigger.

In an example, the method comprises providing the receiver circuit with the generated trigger frame as a signal modulated onto a carrier frequency. This allows the trigger frame to be provided to a receiver implemented using a standard chipset that accepts radio frequency signals at the receive frequency of signals generated by the access point.

In an example, the method comprises providing the receiver circuit with the trigger frame at baseband. This avoids the steps of generating the trigger frame at radio frequency if a receiver is available that accepts an input at baseband.

In an example, the wireless outstation is configured to transmit the uplink message a predetermined time after receiving the trigger frame. For example, transmission of the uplink message may start 16 microseconds from the end of the receipt of the trigger frame.

In an example, the method comprises generating the trigger frame at the wireless outstation with a timing advance generated using a measurement of propagation time between the access point and the outstation. This allows an uplink message to be transmitted for reception at the access point within a predetermined time window.

In an example, the method comprises generating the trigger frame at the wireless outstation with a timing advance such that uplink messages generated by respective outstations in a group of outstations arrive at the access point simultaneously. This allows multi-user access, for example using MU-MIMO and/or OFDMA.

In an example, the wireless outstation is configured to use message formats according to an IEEE 802.11 Wi-Fi standard providing Triggered Uplink Access TUA.

In an example, the uplink message is a High Efficiency Trigger Based Physical Layer Protocol Data Unit HE TB PPDU transmission, configured to allow simultaneous reception of respective uplink messages from a group of outstations.

In an example, the simultaneous reception of respective uplink messages is by respective MU-MIMO spatial streams at the access point.

In accordance with a second aspect of the invention, there is provided a wireless outstation configured for operation in a fixed wireless access network comprising an access point and a plurality of wireless outstations, the wireless outstation comprising: a receiver circuit configured to receive a message from the access point comprising a trigger frame to trigger transmission of an uplink message from the wireless outstation; a trigger frame generation circuit configured to generate a trigger frame; and to provide the generated trigger frame as an input to the receiver circuit; and one or more processors configured to cause the trigger frame generation circuit to generate the trigger frame based on a predetermined time division duplex schedule.

Further features and advantages of the invention will be apparent from the following description of exemplary embodiments of the invention, which are given by way of example only.

### Brief Description of the Drawings

Figure 1 is a schematic diagram illustrating timing of signal triggering and propagation in an embodiment of the invention;
Figure 2 is a block diagram of a wireless outstation in an embodiment of the invention;
Figure 3 is a block diagram illustrating a trigger frame generator and a receiver circuit in an embodiment of the invention; and
Figure 4 is a flow diagram according to an embodiment of the invention.

### Detailed Description

By way of example, embodiments of the invention will now be described in the context of a fixed wireless access network configured to operate using WI-FI message protocols according to IEEE 802.11ax and IEE 802.11be standards, however it will be appreciated that embodiments of the invention are not limited to these specific standards and may apply to systems operating according to other signal formats or standards, or according to proprietary designs.

A fixed wireless access network may provide a number of subscribers with data access, for example Internet access, within a wide geographical area. One or more access points are provided, typically sited on antenna towers, arranged to transmit and receive radio frequency signals to a number of subscriber modules, which may be referred to as outstations, wireless clients, or stations (STA). The subscriber modules, or at least the antennas for the subscriber modules, are typically mounted in fixed positions on buildings, and typically employ high gain antennas aligned with the access point to give reduced signal loss. The path to the access point may be line of sight or non-line of sight, and the path length may be within a wide range of values, from 10s of metres or less to several kilometres or more, giving a wide range of round trip propagation times.

It is convenient to use existing message formats for the fixed wireless access system, since this allows use of commercially available chipsets that the provide a high degree of integration and provide for an economical implementation. For example, Wi-Fi message formats according to IEEE 802.11ax and IEEE 802.11be standards may be used, which may operate in 2.4, 5 and 6 GHz Wi-Fi bands. However, some features provided for in the Wi-Fi standards are intended for use in systems which typically have shorter transmission distances and propagation times than those found in fixed wireless access systems. As a result, fixed wireless access systems using standard Wi-Fi chips or chipsets may not be able to use some of the features of the Wi-Fi standards that would potentially be beneficial.

In particular, Triggered Uplink Access (TUA) mode is a feature of Wi-Fi IEE 802.11ax and IEE 802.11be, which may be referred to as Wi-Fi 6 and Wi-Fi 7, in which an 802.11 MAC frame called a Trigger Frame (TF) is sent by an access point (AP) station. On receipt of the trigger frame, a group of the non-AP stations (STA), corresponding to the outstations of the fixed wireless access system, are triggered to transmit an uplink message to the AP after a fixed delay time of 16 microseconds +/- 400 ns. The uplink messages from the group of stations arrive simultaneously (within a defined window) at the AP. The uplink messages may be so-called HE TB PPDU transmissions, in which HE signifies High Efficiency, having simultaneous transmissions form multiple non-AP HE enabled stations, using OFDMA and/or MU-MIMO. TB signifies Trigger-Based, meaning that the uplink transmission is triggered by the receipt of the trigger frame from the AP. The PPDU is a Physical Layer Protocol Data Unit.

The Triggered Uplink Access mode, if implemented as intended in the Wi-Fi standards, would not be compatible with the signal propagation times that are typically found in a fixed wireless access system. This is because transmission of the uplink messages from the non-AP stations, i.e. the outstations of the fixed wireless access system, is triggered a fixed time after the receipt of the trigger frame from the access point, and the uplink messages are required to be received within a narrow time window at the access point, typically, during the OFDM symbol cyclic prefix, which is 0.8, 1.6 or 3.2us in the Wi-Fi standard.

According to this disclosure, it has been found that the Triggered Uplink Access mode can be usefully used in a fixed wireless access system to control transmission from the outstations, but that in order to allow control of the transmission times by the outstations, a locally generated trigger frame can be fed directly to the receiver circuit of the outstation, instead of being received over-the-air from the access point. This allows the outstation to set the timing of the uplink transmission according to a pre-determined time division duplex schedule. For example, the transmission time of the uplink message may be advanced to allow for the propagation delay to the access point, so that the uplink message arrives at the access point within a pre-determined time window. The time advance may be determined by a measurement of propagation delay between the outstation and the access point, for example based on a measurement of round trip timing. This allows a group of outstations, for example a MU-MIMO group, to transmit at appropriate times so that the transmissions arrive at the access point simultaneously, allowing the transmissions to be decoded according to High Efficiency MU-MIMO and/or OFDMA multi-user protocols. The transmission of the trigger frame from the access point is inhibited, so that the locally-generated trigger frame is used at the outstation.

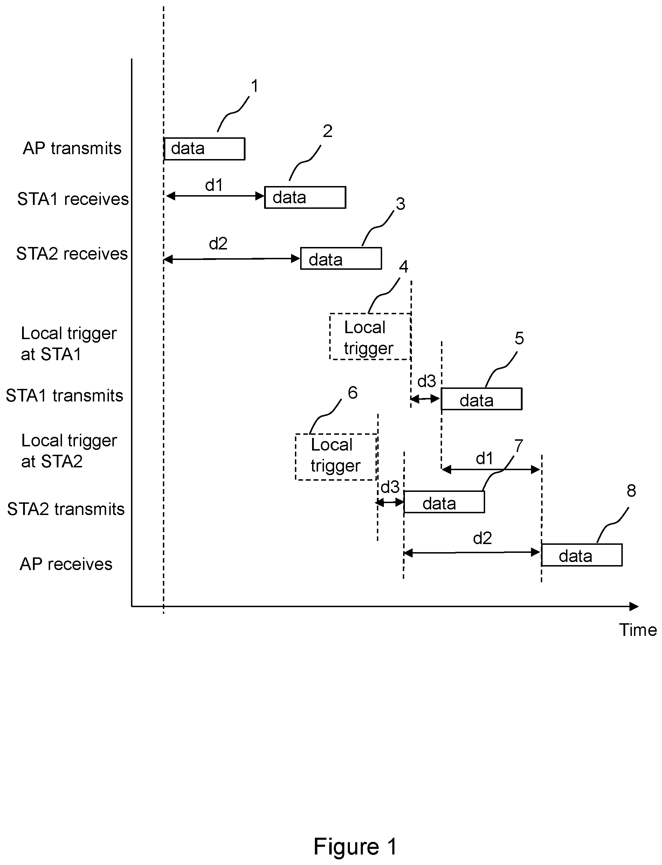

Figure 1 is a schematic diagram illustrating timing of signal triggering and propagation in an embodiment of the invention. On the downlink from the access point (AP) to the outstations (STA1 and STA2), as illustrated, the access point transmits a data message 1, which is received as a received data message 2 at outstation STA1 after propagation delay d1, and is received as a received data message 3 at outstation STA2 after propagation delay d2. A measurement of round trip timing may be used to determine the delays d1 and d2. Because the stations in the fixed wireless access network have fixed positions, a measurement propagation delay may be performed on installation and may be expected to remain valid for an extended period during operation.

On the uplink, as illustrated, a local trigger 4, typically a trigger frame, is generated at STA1, and this is fed directly to the receiver of STA1. After a fixed delay d3, typically 16 microseconds, from the end of the trigger frame, the uplink data message 5 is transmitted from STA1. The uplink data message is received after propagation delay d1 as received data message 8 at the access point. At STA2, a local trigger 6, typically a trigger frame, is generated and this is fed directly to the receiver of STA2. Similarly as for STA1, after a fixed delay d3, typically 16 microseconds, from the end of the trigger frame, the uplink data message 7 is transmitted from STA2. The uplink data message is received after propagation delay d2 as received data message 8 at the access point in the same time window as the uplink data message transmitted from STA1. The received data message 8 is the superposition of the transmitted uplink data message 5 from STA1 and uplink data message 7 transmitted from STA2.

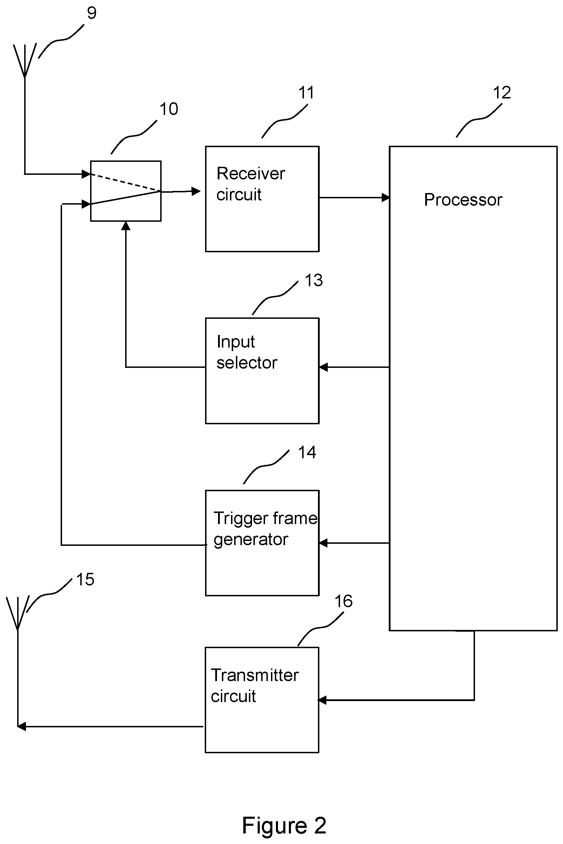

Figure 2 is a block diagram of a wireless outstation according to this disclosure. Signals are received from the access point, typically at the Wi-Fi transmission frequencies of nominally 2.4 GHz, 5 GHz and/or 6 GHz at antenna 9. In a fixed wireless access system, the antenna is typically a directional antenna aligned with the access point to provide improved signal gain and to reject interference arriving from other directions. In the example illustrated, there is a separate receive antenna 9 and transmit antenna 15, but in other examples a single antenna may be used for transmit and receive, and a transmit/receive switch may be used to connect the antenna to the receiver circuit 11 or transmitter circuit 16 as appropriate. As shown, a processor function block 12, which may comprise one or more processors, is connected to a receiver circuit 11, an input selector 13, a trigger frame generator and a transmitter circuit 16. A radio frequency switch 10 is used in this example to select between the antenna 9 and the trigger frame generator 14 to provide the input to the receiver circuit 11. The radio frequency switch may be controlled according to a pre-determined time division duplex sequence under control of the processor. In an alternative arrangement, a signal combiner may be used instead of the switch to connect the antenna and the trigger frame generator to the input of the receiver, provided that the transmission of a trigger frame from the access point is inhibited. Figure 2 is a schematic diagram illustrating functional blocks; the physical implementation may not correspond to the functional blocks. For example, the receiver, transmitter and some or all of the one or more processors may be implemented as one or more application specific integrated circuits (ASICs), also referred to as chips or chipsets. The processor functional block may be implemented by one or more processors configured to carry out instructions held in memory in computer-readable code to cause the outstation to perform the methods described in this disclosure.

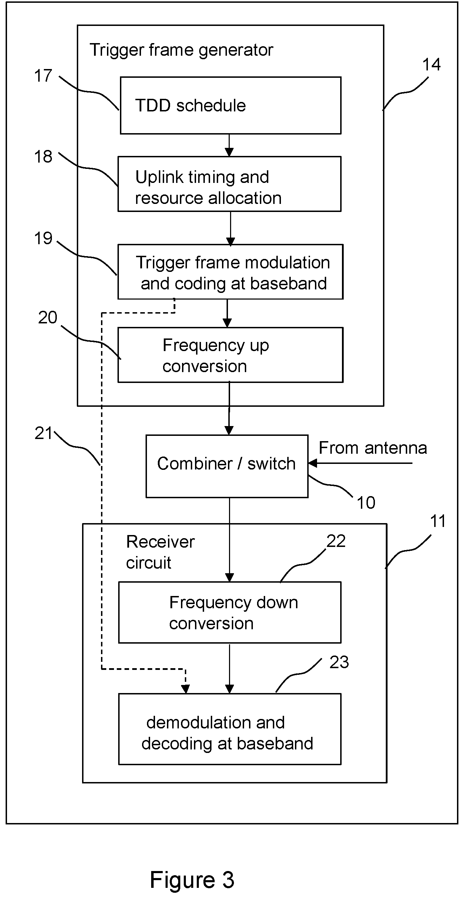

Figure 3 is a block diagram illustrating an example of a trigger frame generator and a receiver circuit according to this disclosure. The trigger frame generator 14 may be a dedicated circuit to generate the trigger frame, or may use parts of the transmitter circuit 16 if these are accessible for this purpose and may include parts of the processor function 12. The trigger frame generator uses a time division duplex schedule 17 to derive uplink timing and resource allocation 18. The time division duplex schedule 17 is a pre-determined sequence of transmit and receive time slots for the access point and the outstations of the fixed wireless access system, allocating uplink and downlink time windows, and in some examples providing a time division multiple access schedule which schedules transmission of individual outstations and/or groups of outstations. For example, a group of outstations may be a MU-MIMO group, which is chosen to provide orthogonal spatial beams to members of the group. In this way, each member of the group is allocated a respective beam to allow simultaneous transmission of different date to and from each member of the group. The TDD schedule may be provided to the access point and the outstations using appropriate signalling, for example from a network control function. As illustrated in Figure 1, the timing of the generation of the trigger frame may use a measure of propagation delay and knowledge of the time division duplex schedule to ensure that uplink messages arrive at the access point in the correct time window of the time division duplex schedule. At block 19, the trigger frame modulation and coding are shown carried out at baseband in this example. The MAC layer trigger frame, according to the appropriate protocol, such as for example 802.11ax or 802.11be, is generated by populating the appropriate fields of the MAC frame stored in memory in the processor. The MAC frame is modulated and coded as appropriate for the transmission standard used, typically using Orthogonal Frequency Division Modulation (OFDM), for example using subcarriers spaced at 78.125 kHz. The OFDM symbols are upconverted 20 in frequency to the transmission frequency, typically in the 2.4, 5 and/or 6 GHz frequency bands, although other frequency bands may be used as appropriate for operation of the fixed wireless access system.

The upconverted signals are switched or combined with signals from the antenna in a combiner/switch unit 10. In examples, this may be an RF switch such as an FET, a directional coupler, or may simply be a resistive combiner.

The receiver circuit 11, which may be part of an ASIC, comprises in this example, a frequency down conversion 22 and demodulation and decoding at baseband, typically receiving OFDM symbols, decoding these according to subcarrier content and processing the decoded data.

As shown in Figure 3, an alternative link 21 may be provided between the trigger frame generator and the receiver circuit, providing a direct link at baseband. This avoids the need for the upconverter stage in the trigger frame generator, but this may not be possible if access to the receiver circuit is not available at baseband in an ASIC implementing the receiver, or indeed a combined receiver and transmitter.

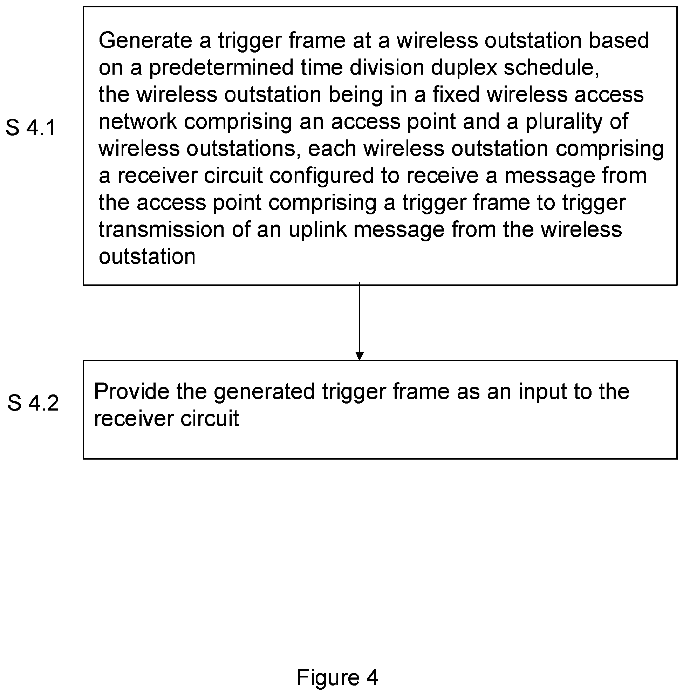

Figure 4 is a flow diagram illustrating a method as disclosed in this description according to steps S4.1 and S4.2.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of operating a wireless outstation in a fixed wireless access network comprising an access point and a plurality of wireless outstations, the wireless outstation comprising a receiver circuit (11) configured to receive a message (2) from the access point comprising a trigger frame to trigger transmission of an uplink message (5) from the wireless outstation, the method comprising:
generating the trigger frame (4) at the wireless outstation based on a predetermined time division duplex schedule; and
providing the generated trigger frame (4) as an input to the receiver circuit (11).

2. A method according to claim 1, comprising providing the receiver circuit (11) with the generated trigger frame (4) as a signal modulated onto a carrier frequency.

3. A method according to claim 1, comprising providing the receiver circuit (11) with the trigger frame (4) at baseband.

4. A method according to any preceding claim, wherein the wireless outstation is configured to transmit the uplink message (5) a predetermined time after receiving the trigger frame.

5. A method according to claim 4, wherein the method comprises generating the trigger frame (4) at the wireless outstation with a timing advance generated using a measurement of propagation time between the access point and the outstation.

6. A method according to claim 5, wherein the method comprises generating the trigger frame (4) at the wireless outstation with a timing advance such that uplink messages generated by respective outstations in a group of outstations arrive at the access point simultaneously.

7. A method according to any preceding claim, wherein the wireless outstation is configured to use message formats according to an IEEE 802.11 Wi-Fi standard providing Triggered Uplink Access TUA.

8. A method according to claim 7, wherein the uplink message is a High Efficiency Trigger Based Physical Layer Protocol Data Unit HE TB PPDU transmission, configured to allow simultaneous reception of respective uplink messages from a group of outstations.

9. A method according to claim 8, wherein the simultaneous reception of respective uplink messages is by respective MU-MIMO spatial streams at the access point.

10. A wireless outstation configured for operation in a fixed wireless access network comprising an access point and a plurality of wireless outstations, the wireless outstation comprising:
a receiver circuit (11) configured to receive a message (2) from the access point comprising a trigger frame to trigger transmission of an uplink message (5) from the wireless outstation;
a trigger frame generation circuit (14) configured to generate a trigger frame (4) and to provide the generated trigger frame (4) as an input to the receiver circuit (11); and
one or more processors (12) configured to cause the trigger frame generation circuit (14) to generate the trigger frame (4) based on a predetermined time division duplex schedule.

11. A wireless outstation according to claim 10, wherein the trigger frame generation circuit (14) is configured to generate the trigger frame (4) as a signal modulated onto a carrier frequency.

12. A wireless outstation according to claim 10, wherein the trigger frame generation circuit (14) is configured to provide the trigger frame (4) to the receiver at baseband.

13. A wireless outstation according to any one of claims 10 to 12, wherein the wireless outstation is configured to transmit the uplink message (5) a predetermined time after receiving the trigger frame.

14. A wireless outstation according to claim 13, wherein the one or more processors (12) are configured to cause the trigger generation circuit (14) to generate the trigger frame (4) with a timing advance generated using a measurement of propagation time between the access point and the outstation, wherein one or more processors (12) are configured to cause the trigger generation circuit (14) to generate the trigger frame (4) with a timing advance such that uplink messages generated by respective outstations in a group of outstations arrive at the access point simultaneously.

15. A wireless outstation according to any one of claims 10 to 14, wherein the wireless outstation is configured to use message formats according to an IEEE 802.11 Wi-Fi standard providing Triggered Uplink Access TUA, wherein the uplink message is a High Efficiency Trigger Based Physical layer Protocol Data Unit HE TB PPDU transmission, configured to allow simultaneous reception of respective uplink messages from a group of outstations, and wherein the simultaneous reception of respective uplink messages is by respective MU-MIMO spatial streams at the access point.
